# EUROPEAN PATENT SPECIFICATION

(11) **EP 0 697 954 B1**
(45) Date of publication and mention of the grant of the patent: **18.03.1998**
(21) Application number: 94914488.5
(22) Date of filing: 09.05.1994
(51) Int. Cl.: B29C 70/00, B29C 37/00

(54) **REINFORCED MOULDED ARTICLES AND METHOD OF PRODUCING SAME**
VERSTÄRKTE FORMKÖRPER UND VERFAHREN ZU DEREN HERSTELLUNG
ARTICLES MOULES ET RENFORCES ET PROCEDE DE PRODUCTION

(30) Priority: 14.05.1993 GB 9309954
(43) Date of publication of application: 28.02.1996
(73) Proprietor: IMPERIAL CHEMICAL INDUSTRIES PLC, London SW1P 3JF (GB)
(72) Inventor: SWIFT, John, Francis, Preston, Lancashire PR2 1LH (GB)
(74) Representative: Nevard, Edward John
(86) International application number: GB9400991
(87) International publication number: WO9426505

(56) References cited:
- WO-A-91/00171
- DE-A- 3 707 949
- PATENT ABSTRACTS OF JAPAN vol. 4, no. 2 (C-69) 9 January 1980 & JP,A,54 137 051 (MATSUSHITA DENKO) 24 October 1979 see abstract
- PATENT ABSTRACTS OF JAPAN vol. 9, no. 179 (M-399)(1902) 24 July 1985 & JP,A,60 048 315 (MEIWA SANGYO) 16 March 1985 see abstract

## Description

The present invention relates to reinforced moulded articles and a method of producing same.

It is known that a moulded article may be formed from a curable composition comprising a finely divided inorganic filler such as silica or alumina trihydrate dispersed in a curable liquid component. Such an article and curable composition are disclosed for example in UK Patent GB 1493393.

Also disclosed in GB 1493393 is the inclusion in the mould of fibre strands through which the curable composition is required to permeate during the moulding process.

The use of such fibrous reinforcment, however, is not common due to the difficulties encountered in preventing show-through of the fibre strands onto the obverse face of the moulded article. Show-through is particularly a problem where the moulded article is required to have an aesthetically attractive obverse face, as in the case of a vanity or wash basin, kitchen work surface and the like.

Moulded articles which do not include fibrous reinforcement can suffer from failure resulting from the stresses induced during thermal cycling of the moulded article. It is known from published European Patent Application EP 0262784 A that a fibrous reinforcement having a mean length of less than 200µm can be incorporated into a composition as disclosed in GB 1493393 to produce a moulded article having improved resistance to failure due to thermal cycling. The fibrous reinforcement is dispersed throughout the moulded article and direction is given in EP 0262784 A to avoid the problem of show-through, by following the teaching of published European Patent Application EP 0061245 A, by providing a fibre free coating of a curable composition on the surface of the mould which contacts the obverse face of the moulded article during moulding.

DE-A-3707949 teaches the use of a two layer web of suitable fibre for reinforcing a moulded article. The layer of fibre which is to be closest to the reverse face of the article has a more open weave than the other layer which covers it. The web is loosely positioned in a desired mould and a hardenable (curable) liquid is introduced into the mould. During the introduction of the curable liquid, the covering layer of fibre is pressed onto the open layer.

JP-A-54-137055 teaches the reinforcement of an injection moulded article, for example formed from polyethylene, by the inclusion of woven or non-woven materials which are fixed to the corners of the moulding prior to injection moulding by an adhesive, adhesive mass or pins.

The careful preparation of the obverse face forming surface of the mould in order to avoid show-through is a major disincentive to the use of fibrous reinforcement.

It has now been found that fibrous reinforcement need not be dispersed throughout the thickness of the moulded article in order to improve the mechanical performance of the moulded article. Thus, if the fibrous reinforcment is confined to a region close to the reverse face of the moulded article a substantial improvement in the impact resistance of the moulded article can be achieved. Furthermore, by so confining the fibrous reinforcement to the reverse face, the problem of show-through at the obverse face is avoided as is the necessary careful preparation of the obverse face forming surface of the mould.

Accordingly the present invention provides a method of forming a moulded article from a curable composition, wherein the article has an obverse face and a reverse face, which method comprises the steps of
(a) releasably securing a mat of fibrous reinforcement to at least part of a reverse face forming surface of a mould, the mat having a thickness such that penetration of the mat through to the obverse face of the moulded article is avoided and wherein the mat is adhered to the surface by an adhesive which is compatible with the curable composition;
(b) introducing into the mould the curable composition containing at least 20% by volume of at least one finely divided inorganic filler dispersed in a curable liquid component in such a manner that the curable composition at least partially penetrates the mat of fibrous reinforcement;
(c) curing the curable composition so that the mat of fibrous reinforcement is held by the cured composition; and
(d) releasing the cured composition from the mould to form the moulded article.

A moulded article capable of being formed by the process of the present invention has an obverse face and a reverse face and comprises a mat of fibrous reinforcement and a cured curable composition containing at least 20% by volume of at least one finely divided inorganic filler, the mat being between the reverse face and the obverse face and having a thickness such that penetration of the moulded article by the mat from the reverse face through to the obverse face is avoided.

The mat of fibrous reinforcement is releasably secured to the reverse face forming surface of the mould by the use of an appropriate adhesive which is compatible with the curable composition, for example where the curable composition contains methyl methacrylate the adhesive may be selected from acrylic based resins or other methacrylates. The adhesive may be applied to the surface prior to placement of the mat on the surface and/or the mat may be separately treated with adhesive. Where the surface can be heated, it is particularly preferred to use a mat treated with a heat sensitive adhesive which activates on contact with the heated surface thereby securing the mat to the surface.

The mat need not be applied to all of the reverse face forming surface. Selective application to those areas located in regions susceptible to high stresses may be sufficient to imbue the moulded article with improved mechanical properties.

The mat may be in the form of one or more separate sheets which are draped over the surface. Alternatively, a preformed mat may be used which has been separately contoured to the shape of the surface.

The mat may be formed from any suitable fibrous material and may be in any general form, e.g. chopped strand mat, continuous filament mat, or woven continuous filament mat. The fibres in such a mat may be held together, for example, by weaving, knitting or merely by virtue of entanglement. Either continuous or discontinuous (short) fibres may form the mat. Suitable materials from which the mat may be formed include fibrous inorganic materials such as glass fibre. Preferably, the mat is formed from woven glass fibre. Typically, such woven glass fibre has a density of between 10 to 500 g.m⁻², for example 60 g.m⁻².

The mat may constitute from 0.5 to 60 % by volume of the total volume of the fibre reinforced polymer composite.

The preferred curable compositions have a viscosity, as measured at 20°C on a Brookfield viscometer (12 rpm, Spindle No 2), in the range of from 100 to 1000 centipoise, since such compositions may be readily transferred to the mould and caused to flow through and wet out the mat of fibrous reinforcement. Furthermore, curable compositions having a viscosity within this range have the ability to contain large amounts of a particulate inorganic filler and still retain a viscosity which is workable in the process of the present invention. More preferably the curable composition has a viscosity in the range of from 400 to 900 centipoise and especially in the range of from 450 to 850 centipoise.

Other preferred curable compositions, for example those disclosed in published European Patent Application EP 0516299 A, contain thixotropic agents and are thus thixotropic in character. Such thixotropic compositions preferably have a thixotropy index of at least 1.1, preferably at least 2 and generally from 1.1 to 4. The thixotropy index is as described in EP 0516299 A, and is the ratio of the viscosity of the thixotropic composition as measured at ambient temperature (approximately 20°C) on a Brookfield viscometer using Spindle No 3 at 6 and at 30 rpm respectively. Such thixotropic compositions have a viscosity measured at 30 rpm of from 5 to 250 Poise and preferably of from 15 to 70 Poise.

The curable composition contains a curable liquid component. The preferred curable liquid components are the ethylenically unsaturated, addition polymerisable liquids comprising at least one ethylenically unsaturated, addition polymerisable monomer and optionally at least one other ethylenically unsaturated, addition polymerisable compound, such as an unsaturated oligomer and/or polymer species.

The at least one addition polymerisable, ethylenically unsaturated monomer may be selected from those monoethylenically and polyethylenically unsaturated monomers known in the art.

Preferred monoethylenically unsaturated monomers are the esters of acrylic and methacrylic acid with alcohols and phenols having the formula CH₂=C(R)CO.OR¹ where R is H or methyl and R¹ is an optionally substituted alkyl, aryl, aralkyl or cycloalkyl group. Suitable substituents include halo and hydroxy substituents. Preferred monomers therefore include methyl methacrylate, ethyl methacrylate, isopropyl methacrylate, isobutyl methacrylate, cyclohexyl methacrylate, isobornyl methacrylate, benzyl methacrylate, phenyl methacrylate, isobornyl acrylate, hydroxyethyl methacrylate and hydroxypropyl methacrylate. Particularly preferred monomers are the optionally substituted alkyl methacrylates having the formula CH₂=C(CH₃)CO.OR² where R² is an optionally substituted, but preferably unsubstituted C₁₋₁₀ alkyl group.

Other suitable monoethylenically unsaturated monomers may be selected from the vinyl aromatic monomers such as styrene and the substituted derivatives thereof, e.g. the halo substituted styrenes and vinyl toluene.

Preferred polyethylenically unsaturated monomers are the polyethylenically unsaturated monomers having two or more acrylic or methacrylic double bonds such as ethylene glycol dimethacrylate, ethylene glycol diacrylate, 1,3-butylene glycol dimethacrylate, 1,3-butylene glycol diacrylate, triethylene glycol dimethacrylate, triethylene glycol diacrylate, trimethylolpropane trimethacrylate and trimethylolpropane triacrylate.

Examples of ethylenically unsaturated, addition polymerisable polymer species include the ethylenically unsaturated polyester resins.

The curable liquid component may also include an unsaturated urethane containing resin comprising:
(i) an ethylenically unsaturated urethane composition containing at least one unsaturated urethane compound having an average double bond functionality (i.e. an average number of double bonds per molecule) of greater than 1.0; and
(ii) at least one ethylenically unsaturated monomer which is a solvent for, and is copolymerisable with the unsaturated urethane composition.

The unsaturated urethane composition is preferably the product obtained from the reaction of a reactant mixture containing at least one hydroxyl containing vinyl monomer, at least one organic polyisocyanate or isocyanate functional derivative thereof having an average isocyanate functionality of at least 2.0 and optionally at least one saturated compound containing a plurality of isocyanate reactive groups.

In a preferred embodiment, the unsaturated urethane composition is a polyurethane polyacrylate and/or polymethacrylate composition which is the reaction product of:
(1) at least one hydroxyalkyl acrylate and/or methacrylate compound;
(2) at least one polyisocyanate or isocyanate functional derivative thereof having an average isocyanate functionality of at least 2.0 and preferably greater than 2.0; and
(3) optionally at least one saturated polyol.

Where the polyurethane polyacrylate and/or polymethacrylate composition is derived from reactants (1) and (2), the proportions of the reactants can be varied within a wide range providing the final product has the requisite amount of ethylenic unsaturation. However, it is generally preferred to react all or essentially all the isocyanate groups to form urethane groups, which means that the amount of the hydroxyalkyl (meth)acrylate relative to the polyisocyanate or isocyanate functional derivative thereof should be such as to provide at least one mole of hydroxyl groups per mole of isocyanate groups. Excess (unreacted) hydroxyalkyl (meth)acrylate in the final product is in general not objectionable, since any such excess may be incorporated in the copolymer produced in the subsequent addition polymerisation reaction. In effect, any excess hydroxyalkyl (meth)acrylate will form at least a part of the copolymerisable solvent monomer.

Where the polyurethane polyacrylate and/or polymethacrylate composition is derived from reactants (1), (2) and (3), it is desirable to avoid the presence of unreacted polyol in the final product. Accordingly, it is preferred to employ the reactants in such amounts that the polyisocyanate or isocyanate functional derivative provides at least one mole of isocyanate groups per mole of hydroxyl groups provided by the hydroxyalkyl (meth)acrylate and the saturated polyol. Of course, the amount of the hydroxyalkyl (meth)acrylate employed in the urethanation reaction should be such as to provide the requisite amount of ethylenic unsaturation in the final product.

The hydroxyalkyl acrylate(s) and/or methacrylate(s) preferably contains from 2 to 4 carbon atoms in the hydroxyalkyl group; 2-hydroxyethyl and 2-hydroxypropyl acrylates and methacrylates are especially preferred. Mixtures of two or more hydroxyalkyl acrylates and/or methacrylates may be used if desired.

Suitable saturated polyols for the manufacture of the polyurethane poly(meth)acrylate include those conventionally used in the art for producing polyurethanes by reaction of a polyol with a polyisocyanate. Preferably the polyol is a diol or trio, although we do not exclude the possibility that the polyol may contain more hydroxyl groups. Mixtures of two or more polyols may be used if desired.

Representative examples of suitable polyols are the glycols of formula HO-R-OH, where R represents, for example, an alkylene or polyalkylene ether chain, e.g. ethylene glycol, propylene glycol, butan-1,4-diol, pentan-1,5-diol, hexan-1,6-diol, diethylene glycol, dipropylene glycol, polyethylene glycol, polypropylene glycol, polybutylene glycol and polytetrahydrofuran; dihydric phenols and bisphenols, for example, 2,2-bis(4-hydroxyphenyl) propane (Bisphenol A) and bis(4-hydroxyphenyl) sulphone (Bisphenol S), and alkoxylated derivatives of the bisphenols, for example the ethoxylated and propoxyiated derivatives thereof.

Further suitable polyols include the triols such as glycerol, pentaerythritol, and trialkylolalkanes, for example trimethylolpropane, triethylolpropane and tributylolpropane, and alkoxylated derivatives of the trialkylolalkanes, for example the ethoxylated and propoxylated derivatrves thereof.

The average isocyanate functionality of the polyisocyanate or derivative thereof (i.e. the average number of isocyanate groups per molecule) is at least 2.0 and preferably is greater than 2.0. In a more preferred embodiment, the average isocyanate functionality of the polyisocyanate or derivative thereof is at least 2.2 and preferably is in the range 2.5 to 3.0. A mixture of polyisocyanates or derivatives thereof having an average isocyanate functionality as specified herein may also be used.

The polyisocyanates may be of the aliphatic, alicyclic or aromatic type and may be selected from any of those polyisocyanates that are conventionally used in the art for the preparation of polyurethane polymers. Examples of aliphatic polyisocyanates include ethylene diisocyanate, trimethylene diisocyanate, tetramethylene diisocyanate, pentamethylene diisocyanate and hexamethylene diisocyanate. Examples of alicyclic polyisocyanates include isophorone diisocyanate and 4,4-(di-isocyanato)-dicyclohexyl-methane. However, the preferred polyisocyanates are the aromatic type polyisocyanates in which the isocyanate groups are bonded to aromatic groups. Examples of aromatic polyisocyanates include, inter alia, 4,4'-diphenylmethane and 2,4'-diphenylmethane diisocyanates, 2,4-tolylene and 2,6-tolylene diisocyanates and polymethylene polyphenyl polyisocyanates. Of these 4,4'-diphenylmethane diisocyanate, 2,4'-diphenylmethane diisocyanate, polymethylene polyphenyl polyisocyanates and the commercially available mixtures thereof are preferred. Preferably the polyisocyanate is or includes a polymethylene polyphenyl polyisocyanate.

Polyisocyanate derivatives which may be used in the preparation of the unsaturated urethane composition include polyisocyanate functional compositions containing urethane, allophanate, urea, biuret, carbodiimide, uretonimine or isocyanurate groups. Such derivatrves and methods for their preparation have been fully described in the prior art, such as the derivatives obtained from 4,4'-diphenylmethane and 2,4'-diphenylmethane diisocyanates and their mixtures with polymethylene polyphenyl polyisocyanates, for example the uretonimine modified polyisocyanates.

Particularly preferred polyisocyanate derivatives are the urethane-modified polyisocyanates, or prepolymers (hereinafter urethane polyisocyanates), having an average isocyanate functionality as defined above, and obtained by reacting an organic polyisocyanate(s) with the hydroxyl groups of a saturated polyol(s). An excess of the polyisocyanate is normally employed so that the isocyanate functionality of the urethane polyisocyanate will be the same as or greater than the isocyanate functionality of the polyisocyanate used as starting material. Whichever particular polyol is used, the relative proportions of the polyol and polyisocyanate and/or the isocyanate functionality of the polyisocyanate are chosen so as to yield the required isocyanate functionality in the urethane polyisocyanate. If the urethane polyisocyanate is to be obtained from a diisocyanate and where it is desired that the urethane polyisocyanate has an isocyanate functionality of greater than 2.0, reaction of the diisocyanate with a polyol containing more than two hydroxyl groups will be necessary in order to yield a urethane polyisocyanate hang the desired isocyanate functionality of greater than 2.0. The urethane polyisocyanate is preferably obtained by reaction of a polyol with a polyisocyanate having an average isocyanate functionality of greater than 2.0.

The polyisocyanates and especially the preferred polyisocyanates mentioned above will generally be employed for the manufacture of the urethane polyisocyanate.

Suitable saturated polyols for the manufacture of the urethane polyisocyanate include those described above as being suitable for reactant (3).

In preferred embodiments, the at least one unsaturated urethane compound has an average double bond functionality of at least 2.0, more preferably at least 2.2, and especially in the range of from 2.5 to 3.0. Preferably, the unsaturated urethane composition comprises from 0.05 to 0.5 moles, preferably from 0.1 to 0.5 moles, and more preferably from 0.2 to 0.5 moles of ethylenic double bonds per 100 g thereof. Unsaturated urethane compounds having the desired amounts of ethylenic unsaturation can be obtained by appropriate selection of the amounts and types of precursors which are used in the preparation thereof.

The unsaturated urethane resin also comprises at least one ethylenically unsaturated monomer which is a vehicle for, and is copolymerisable with the unsaturated urethane composition. The at least one copolymerisable monomer may be selected from the ethylenically unsaturated, addition polymerisable monomers known in the art.

Suitable ethylenically unsaturated copolymerisable monomers include the acrylic and methacrylic acid ester monomers, the vinyl aromatic monomers and the poly(meth)acrylate monomers discussed supra.

Alkyl methacrylates, in particular methyl methacrylate, and mixtures thereof with styrene provide a particularly suitable copolymerisable solvent vehicle for the unsaturated urethane composition.

The unsaturated urethane composition preferably constitutes from 10 to 90 % by weight, more preferably from 25 to 75 % by weight of the total weight of the unsaturated urethane composition and the copolymerisable monomer(s).

The at least one copolymerisable monomer may be simply added to the unsaturated urethane composition in order to form the unsaturated urethane resin. However, if the copolymerisable monomer is of a type which is inert in the conditions used to from the urethane composition, it is most desirable to utilise such as a liquid vehicle in which the unsaturated urethane composition is formed.

The unsaturated urethane resin may also comprise a co-reactive, ethylenically unsaturated polymer resin. For example, ethylenically unsaturated polyester resins may be incorporated into the unsaturated urethane resin in an amount up to 50% by weight, e.g. 10 to 50 % by weight, based on the total weight of the unsaturated urethane composition, the copolymerisable monomer(s) and the polyester resin.

The unsaturated urethane composition may be prepared using techniques conventional in the art for the preparation of polyurethanes.

The preparation of the unsaturated urethane composition is preferably carried out in the presence of an inert liquid diluent. A wide range of diluents may be used, but most conveniently, in order to avoid the need for separation of the unsaturated urethane composition, the diluent is a monomer which does not comprise any isocyanate reactive groups and which can therefore, after reaction of the urethane precursors, form at least a part of the copolymerisable solvent monomer(s). Examples of such monomers for use as the liquid diluent are the alkyl methacrylates, e.g. methyl methacrylate.

Where it is desired to include in the unsaturated urethane containing resin, an ethylenically unsaturated monomer(s) which contains an isocyanate reactive group(s), such monomer may be added after the reaction to form the unsaturated urethane composition is complete.

Catalysts which may be used in the reaction of the urethane precursors may be those known in the art of polyurethane production, for example tertiary amines and metal salts, e.g. tin (II) octoate and di-n-butyltin dilaurate.

A preferred unsaturated urethane resin is one which polymerises/cures to form a solid polymer matrix having a glass transition temperature (tan delta max) of at least 60°C, preferably of at least 80°C and more preferably of at least 100°C, e.g. 100 to 180°C.

The curable composition also contains a finely divided inorganic filler material.

Suitable fillers include amphoteric, basic and silicaceous fillers, and may be of natural or synthetic origin. The filler, if amphoteric, may, for example, be an oxide of this type. Suitable such fillers include oxides and hydroxides of aluminium, including hydrated alumina. The filler, if basic, may, for example, be an oxide, a hydroxide, a carbonate or a basic carbonate. Suitable fillers of this type include, inter alia, the oxides, hydroxides, carbonates and basic carbonates of alkaline earth metals and of zinc. Suitable silicaceous fillers include, inter alia, substantially pure silica, for example sand, quartz, cristobalite and precipitated or fused silica, or the metal silicates or aluminosilicates. Further useful fillers may be selected from the metal aluminates, phosphates, sulphates, sulphides and carbides.

Preferably, the finely divided fillers for use in the invention have a mean particle size in the range of from 0.1 to 250 microns and more preferably in the range of from 0.1 to 100 microns. In talking about the size of the particles we are referring to the size thereof across their largest dimension. The filler particles for use in the invention may have any form suitable for a filler, e.g. they may be of granular, fibrillar or laminar form.

In order to attain high filler loadings the filler may also consist of two or more sets of particles having widely differing mean sizes such that one set of particles can fit in the interstices of the other within the polymer matrix.

The curable compositions may contain from 1 % to 90 % by volume of a finely divided filler material. Preferably, the amount of the filler (if included) is from 20 % to 75 % by volume, more preferably from 40 % to 70% by volume, of the total volume of the curable composition.

Where the filler is already available in the required particle size, the filler particles can be dispersed in the curable liquid using techniques such as roll milling or high shear mixing. A further suitable mixing technique involves dispersing the filler in a liquid component of the curable liquid, e.g. in a portion of the liquid monomeric component, and then mixing the resultant dispersion with the remaining components of the curable liquid. Alternatively, the finely divided particles may be produced directly in the presence of the curable liquid, or in a liquid component thereof, by comminution of coarse particles. Comminution of coarse material to yield smaller size particles can be readily carried out using conventional ball mills, stirred ball mills or vibratory mills.

The curable compositions may also comprise a polymeric dispersant to assist the dispersion of the filler in the curable liquid. Furthermore, the curable compositions may comprise a coupling agent having active groupings to promote polymer matrix/filler particle bonding. Suitable coupling agents comprise one or more groups capable of interacting with groups in the particulate inorganic filler, and also one or more ethylenically unsaturated, addition polymerisable groups which can copolymerise with the constituents of the curable liquid.

The selection of a suitable dispersant and coupling agent is within the purview of the man skilled in the art.

The curable compositions may comprise one or more preformed polymers which may be in solution in the curable liquid component or in a state of dispersion therein. Preformed polymers which function as low profile additives to reduce the shrinkage which accompanies the curing reaction, or which function as rubber modifiers to improve the impact resistance of the finally cured composites may be particularly useful additions to the curable compositions. Where low profiling and/or impact modifying preformed polymers are incorporated in the curable compositions, they may be added in amounts which are conventional in the art. Preformed polymers may also be incorporated in the curable compositions as a thickening aid to increase the viscosity thereof.

The preformed polymer may be dispersed or dissolved in the curable liquid component using vigorous mixing, e.g. as is provided by a high shear mixer. A further suitable technique involves mixing the preformed polymer in a liquid component of the curable liquid, e.g. in a portion of the liquid monomeric component, and then adding the resulting monomer/preformed polymer dispersion or solution, with mixing, to the remaining components of the polymerisable liquid.

The curable compositions may also incorporate other additives conventional in the art such as pigments, dyestuffs, internal mould release agents, thixotropic agents and polymerisation inhibitors.

The polymerisation/curing reaction may be initiated using polymerisation catalysts known in the art. The catalyst is preferably added immediately prior to curing the curable compositions in the mould; this is particularly important where the catalyst is activated at temperatures below or around ambient. Where the polymerisable liquid comprises ethylenically unsaturated, addition polymerisable species, suitable catalysts may be selected from the organic peroxides, such as dioctanoyl peroxide and dibenzoyl peroxide which may be used in conjunction with an amine accelerator, e.g. N,N-dimethylaniline or N,N-dimethyl-para-toluidine; the hydroperoxides, such as t-butyl hydroperoxide; the peroxydicarbonates, such as diisopropylperoxydicarbonate, and the peresters.

Where heat activated polymerisation catalysts are employed the mould should be heated, e.g. by a heat transfer fluid circulating within the mould parts defining the mould cavity, in order to activate the catalyst and initiate the curing reaction. The mould may also be heated where it is desired to subject the fibre reinforced polymer article prepared in the mould to an in-mould post-cure reaction.

It may be desirable during the filling of the mould to maintain the temperature of the mould surfaces below the temperature at which the catalyst is activated, so as to prevent premature polymerisation and gelation.

After the in-mould cure is complete, the fibre reinforced polymer article thus prepared may optionally be subjected to an in-mould post-cure, after which it is demoulded, or, alternatively, it may be demoulded immediately and then optionally subjected to a post-cure.

The present invention is illustrated by reference to the following examples.

### Example 1

A two-part mould of conventional design and construction and as used in the moulding of sinks from curable compositions of the type disclosed in GB 1433993 was preheated such that the obverse face forming surface was at 80°C and the reverse face forming surface was at 50°C.

Eight layers of a woven glass fibre precoated with adhesive, each layer having a density of 60 g.m⁻², were adhered to the reverse face forming horizontal surfaces of the mould. (The woven glass fibre may be obtained from Specialist Adhesive Tapes, 46 Bickford Road, Witton, Birmingham, England).

The mould was assembled and the following curable composition introduced into the closed mould.

| | % w/w |
|---|---|
| Alumina trihydrate (ATH) | 63.0 |
| BONAR LS600 - thickening agent/viscosifier | 2.1 |
| BONAR CRG017 - polymeric dispersant | 0.1025 |
| Ethylene glycol dimethacrylate | 0.3 |
| A174 - silane coupling agent from Union Carbide | 0.0082 |
| Methyl methacrylate (MMA) | 34.49 |
| Topanol A - stabiliser | 150 ppm of MMA |
| Claytone PS-2 - thixotropic agent from Laporte Industries | 0.75 |
| Pigment | 0.5 |
| Perkadox 16 | 0.6 |
| Stearic acid | 0.3 |
| BONAR is a trademark of Bonar Polymers Limited. | |

The curable composition was held within the mould under a pressure of about 4.5 bar for about 35 minutes. On release from the mould the obverse face was glossy with no evidence of show-through.

Sinks prepared according to the above process were then subjected to the following tests.

Alternate streams of hot (95°C) and cold (15°C) water were repeatedly cycled (5000 cycles) through the sink at a rate of 6 litres per minute. No show-through was apparent and only 3 small stress cracks were seen on the obverse face as compared with 30 such cracks for conventional sinks made without fibrous reinforcement.

The impact performance was determined by subjecting sinks to increasing impacts from a 441.5 g, 47 mm diameter steel ball bearing. The impact energy was increased in 1 J steps. At an impact energy of 5 J the sinks of the present invention exhibited surface cracking around the edge of the bowl whereas at an impact energy of 2 J the conventional sinks were penetrated and holed by the ball bearing.

## Claims

1. A method of forming a moulded article from a curable composition, wherein the article has an obverse face and a reverse face, which method comprises the steps of
(a) releasably securing a mat of fibrous reinforcement to at least part of a reverse face forming surface of a mould, the mat having a thickness such that penetration of the mat through to the obverse face of the moulded article is avoided and wherein the mat is adhered to the surface by an adhesive which is compatible with the curable composition;
(b) introducing into the mould the curable composition containing at least 20% by volume of at least one finely divided inorganic filler dispersed in a curable liquid component in such a manner that the curable Composition at least partially penetrates the mat of fibrous reinforcement;
(c) curing the curable composition so that the mat of fibrous reinforcement is held by the cured composition; and
(d) releasing the cured composition from the mould to form the moulded article.

2. A method as claimed in claim 1 wherein the mat is adhered to the surface by the use of an adhesive which is applied to the surface prior to placement of the mat thereon.

3. A method as claimed in claim 1 wherein the mat is treated with a heat sensitive adhesive prior to contact with the surface and the surface is heated so as to activate the heat sensitive adhesive thereby adhering the mat to the surface.

4. A method as claimed In any one of the preceding claims wherein the curable composition contains methyl methacrylate and the adhesive is selected from acrylic based resins or other methacrylates.

5. A method as claimed in any one of the preceding claims wherein the mat is selectively applied to an area located in a region of the moulded article which in use is susceptible to high stresses.

6. A method as claimed in any one of the preceding claims wherein the mat is formed of one or more separate sheets.

7. A method as claimed in any one of the preceding claims wherein the mat is a preformed mat which has been separately contoured to the shape of the surface.

8. A method as claimed in any one of the preceding claims wherein the mat is formed from woven glass fibre having a density of from 10 to 500 g.m⁻².

9. A method as claimed in any one of the preceding claims wherein the mat constitutes from 0.5 to 60 % by volume of the total volume of the moulded article.

## Patentansprüche

1. Verfahren zur Formung eines geformten Artikels aus einer härtbaren Zusammensetzung, wobei der Artikel eine Vorderseitenfläche und eine Rückseitenfläche hat, wobei das Verfahren die Schritte umfaßt:
(a) ablösbare Befestigung einer Matte einer faserartigen Verstärkung an mindestens einen Teil einer die Rückseitenfläche bildenden Oberfläche einer Form, wobei die Matte eine derartige Dicke hat, daß das Durchdringen der Matte durch die Vorderseitenfläche des geformten Artikels vermieden wird, und wobei die Matte an die Oberfläche durch einen Klebstoff geklebt wird, welcher mit der härtbaren Zusammensetzung verträglich ist;
(b) Einführung der härtbaren Zusammensetzung, welche mindestens 20 Vol.-% mindestens eines fein verteilten anorganischen Füllstoffs in einer härtbaren flüssigen Komponente dispergiert enthält, auf eine derartige Weise in die Form, daß die härtbare Zusammensetzung mindestens teilweise die Matte der faserartigen Verstärkung durchdringt;
(c) Härten der härtbaren Zusammensetzung, so daß die Matte der faserartigen Verstärkung von der gehärteten Zusammensetzung gehalten wird; und
(d) Ablösen der gehärteten Zusammensetzung von der Form zur Formung des geformten Artikels.

2. Verfahren nach Anspruch 1, wobei die Matte unter Verwendung eines Klebstoffs an die Oberfläche geklebt wird, welcher vor dem Anbringen der Matte darauf auf die Oberfläche aufgetragen wird.

3. Verfahren nach Anspruch 1, wobei die Matte vor dem Kontakt mit der Oberfläche mit einem hitzeempfindlichen Klebstoff behandelt und die Oberfläche erhitzt wird, um so den hitzeempfindlichen Klebstoff zu aktivieren, wodurch die Hatte an die Oberfläche geklebt wird.

4. Verfahren nach einem der vorhergehenden Ansprüche, wobei die härtbare Zusammensetzung Methylmethacrylat enthält und der Klebstoff aus Harzen auf Acrylbasis oder anderen Methacrylaten ausgewählt wird.

5. Verfahren nach einem der vorhergehenden Ansprüche, wobei die Matte selektiv auf eine Fläche aufgetragen wird, welche sich in einem bei der Verwendung für hohe Belastungen anfälligen Bereich des geformten Artikels befindet.

6. Verfahren nach einem der vorhergehenden Ansprüche, wobei die Matte aus einer oder mehreren getrennten Schichten gebildet wird.

7. Verfahren nach einem der vorhergehenden Ansprüche, wobei die Matte eine vorgebildete Matte ist, welche getrennt an die Form der Oberfläche angepaßt wurde.

8. Verfahren nach einem der vorhergehenden Ansprüche, wobei die Matte aus gewobener Glasfaser mit einer Dichte von 10 bis 500 gm⁻² gebildet ist.

9. Verfahren nach einem der vorhergehenden Ansprüche, wobei die Matte 0,5 bis 60 Vol.-% des Gesamtvolumens des geformten Artikels ausmacht.

## Revendications

1. Procédé pour former un article moulé à partir d'une composition durcissable, dans lequel l'article a un avers et un revers, lequel procédé comprend les étapes de :
(a) fixation de façon détachable d'une nappe de renforcement fibreux sur au moins une partie d'une surface d'un moule formant le revers, la nappe ayant une épaisseur telle que la nappe ne pénètre pas à travers l'article moulé jusqu'à l'avers de celui-ci et où la nappe est collée à la surface par un adhésif qui est compatible avec la composition durcissable;
(b) introduction dans le moule de la composition durcissable contenant au moins 20% en volume d'au moins une charge inorganique finement divisée dispersée dans un composant liquide durcissable de telle manière que la composition durcissable pénètre au moins partiellement dans la nappe de renforcement fibreux.
(c) durcissement de la composition durcissable pour que la nappe de renforcement fibreux soit maintenue par la composition durcie; et
(d) démoulage de la composition durcie pour former l'article moulé.

2. Procédé suivant la revendication 1, dans lequel la nappe est collée à la surface par utilisation d'un adhésif qui est appliqué sur la surface avant la mise en place de la nappe sur celle-ci.

3. Procédé suivant la revendication 1, dans lequel la nappe est traitée avec un adhésif sensible à la chaleur avant mise en contact avec la surface et la surface est chauffée de façon à activer l'adhésif sensible à la chaleur de façon à faire adhérer la nappe à la surface.

4. Procédé suivant l'une quelconque des revendications précédentes, dans lequel la composition durcissable contient du méthacrylate de méthyle et l'adhésif est choisi parmi des résines à base acrylique ou d'autres méthacrylates.

5. Procédé suivant l'une quelconque des revendications précédentes, dans lequel la nappe est appliquée de façon sélective sur une zone située dans une région de l'article moulé qui est susceptible de subir des contraintes élevées en cours d'utilisation.

6. Procédé suivant l'une quelconque des revendications précédentes, dans lequel la nappe est formée d'une ou de plusieurs feuilles séparées.

7. Procédé suivant l'une quelconque des revendications précédentes, dans lequel la nappe est une nappe préformée qui a été façonnée de façon séparée pour épouser la forme de la surface.

8. Procédé suivant l'une quelconque des revendications précédentes, dans lequel la nappe est formée à partir de fibres de verre tissées ayant une densité de 10 à 500 g/m².

9. Procédé suivant l'une quelconque des revendications précédentes, dans lequel la nappe constitue de 0,5 à 60% en volume du volume total de l'article moulé.
